# EUROPÄISCHE PATENTSCHRIFT

(11) **EP 0 445 758 B1**
(45) Veröffentlichungstag und Bekanntmachung des Hinweises auf die Patenterteilung: **02.11.1995**
(21) Anmeldenummer: 91103381.9
(22) Anmeldetag: 05.03.1991
(51) Int. Cl.: G03H 1/00, G03H 1/02, G11B 7/24, G06K 9/76

(54) **Verfahren zur Verbesserung des Signal-Rausch-Verhältnisses bei der Holographie mit Aufzeichnungsmedien auf Bacteriorhodopsinbasis**
Method for improving the signal-to-noise ratio in holography when using bacteriorhodopsin based recording media
Procédé pour améliorer le rapport signal/bruit dans l'holographie sur moyens d'enregistrement à base de bactériorhodopsine

(30) Priorität: 08.03.1990 DE 4007374
(43) Veröffentlichungstag der Anmeldung: 11.09.1991
(73) Patentinhaber: Consortium für elektrochemische Industrie GmbH, D-81379 München (DE)
(72) Erfinder: Hampp, Norbert, Dr. Dipl.-Phys., W-8000 München 40 (DE); Oesterhelt, Dieter, Prof. Dr., W-8000 München 70 (DE); Thoma, Ralph, Dipl.-Phys., W-8000 München 60 (DE); Bräuchle, Christoph, Prof. Dr., W-8000 München 83 (DE)

(56) Entgegenhaltungen:
- SOVIET PHYSICS TECHNICAL PHYSICS, Bd. 30, Nr. 10, Oktober 1985, New York US, Seite 1235; N.N. VSEVOLODOV et al.: "Holograms in biochrome, a biological photochromic material"
- PATENT ABSTRACTS OF JAPAN vol. 10, no. 38 (P-428)(2095) 14. Februar 1986 ; & JP-A-60 184 246
- APPLIED OPTICS, Bd. 9, Nr. 10, Oktober 1970, New York US, Seiten 2394-2396; H.W. ROSE et al.: "Polarization Effects in Holography"
- APPLIED PHYSICS LETTERS, Bd. 19, Nr. 9, 1. November 1971, New York US, Seiten 359-360; H. OKAYAMA et al.: "Polarization Effects in Holography"

## Beschreibung

Die Erfindung betrifft ein Verfahren zur Verbesserung des Signal-Rausch-Verhältnisses bei der Holographie mit Aufzeichnungsmedien auf Bacteriorhodopsinbasis.

Die Verwendung von Bacteriorhodopsin oder Bacteriorhodopsin-Varianten als wirksame Komponente in optischen Aufzeichnungsmedien ist bekannt. Als Beispiel sei auf die japanische Anmeldung mit der Nummer JP 60/184246 A2 verwiesen, in der das Aufzeichnen, Lesen und Überschreiben von Informationen in dünne, auf eine Unterlage aufgebrachte Bacteriorhodopsin-Filme beschrieben ist, und auf einen Übersichtsartikel von P. Kouyama et al., "Structure and function of bacteriorhodopsin", der in Adv. Biophys. 24 (1988), 123-175 erschienen ist und die Grundlagen dieser Einsatzmöglichkeiten anspricht.

Aus Gründen der größeren Stabilität gegenüber thermischer, chemischer und photochemischer Zerstörung bzw. Degradation wird in optischen Aufzeichnungsmedien das Bacteriorhodopsin und/oder seine Varianten als wirksame Komponente bevorzugt nicht in Form der freien Moleküle, sondern in membrangebundener Form, also in der Regel in Form der, gegebenenfalls zerkleinerten, Purpurmembran bzw. von Varianten derselben eingesetzt.

Die Purpurmembran kann z.B. aus Halobacterium halobium gewonnen werden und enthält das photochrome Protein Bacteriorhodopsin. Varianten der Purpurmembran, d.h. solche, die Varianten des Bacteriorhodopsins enthalten, lassen sich in an sich bekannter Weise mit Hilfe von biotechnologischen Verfahren z.B. durch Variation des Retinal-Chromophors mittels chemischen Austausches oder durch Modifikation des Bacterio-opsin-Moleküls erhalten (vgl. z.B. W. Gärtner, D. Oesterhelt, 1988, Methoxyretinals in bacteriorhodopsin. Absorption maxima, cis-trans-isomerization and retinal protein interaction, Eur. J. Biochem. 176:641-648, oder Soppa, J. et al., 1989, Bacteriorhodopsin mutants of Halobacterium spec. GRB. 1 bzw. 2, J. Biol. Chem. 264: 13043-13048 bzw. 13049-13056). In diesem Arikel sind auch Beispiele für solche geeignete Varianten beschrieben. Gleichermaßen geeignet sind dem Bacteriorhodopsin verwandte Pigmentsysteme wie Halorhodopsin oder Sensorrhodopsin, die in Analogie zum Bacteriorhodopsin in freier, kristalliner oder membrangebundener Form, in Wildtyp-Form oder mit modifiziertem Chromophor bzw. modifizierter Aminosäuresequenz vorliegen können. Aus Gründen der Vereinfachung wird im folgenden für derartige geeignete Aufzeichnungsmedien, die Bacteriorhodopsin, Halorhodopsin oder Sensorrhodopsin bzw. deren Varianten oder Mutanten als wirksame Komponente enthalten, der Begriff "Aufzeichnungsmedien auf Bacteriorhodopsinbasis" verwendet; das dabei ausgeführte gilt jedoch sinngemäß auch für die anderen geeigneten Pigmentsysteme, ohne daß eigens noch einmal darauf verwiesen wird.

Eine besonders vielversprechende Anwendung von derartigen Aufzeichnungsmedien auf Bacteriorhodopsinbasis liegt in der Holographie, worunter neben den rein holographischen Verfahren auch solche optischen Verfahren zu verstehen sind, die einen oder mehrere holographische Teilschritte beinhalten. Bevorzugt wird in der Holographie das Aufzeichnungsmedium auf Bacteriorhodopsinbasis in Form von Filmen oder Gelen, eingebettet in Trägermaterialien wie z.B. Polymere, aufgebracht auf Substrate wie etwa Glasplatten oder in anderer, eine reproduzierbare flächenhafte Anordnung gestattender Form eingesetzt. Die Vorteile liegen insbesondere im günstigen Absorptionsbereich, in der hohen erzielbaren Auflösung, in der hohen Zahl der möglichen Schreib-/Löschzyklen, in der hohen Lagerstabilität, in der hohen Sensitivität und Lichtechtheit. Auch ein Einsatz bei der Farbholographie ist möglich. Dies gilt für sämtliche mit Aufzeichnungsmedien auf Bacteriorhodopsinbasis möglichen Hologrammtypen, wie etwa die oft als B-Typ-Hologramme bezeichneten Ausführungsformen, bei denen eine Photokonversion des Anfangszustandes (=B) der wirksamen Komponente vorgenommen wird, oder diejenigen Hologrammtypen, bei denen ein Zwischenzustand oder Photointermediat einer Photokonversion unterworfen wird. Vorteilhaft wird dafür ein Intermediat ausgewählt, dessen Absorptionseigenschaften sich deutlich von denen des Anfangszustandes unterscheiden. Ein solches Intermediat, welches sich günstig für holographische Zwecke einsetzen läßt, steht beispielsweise in Form des häufig als M-Zustand bezeichneten Zwischenzustandes des natürlich vorkommenden Bacteriorhodopsins zur Verfügung.

Ein schwerwiegender Nachteil, der bisher einer breiteren Anwendung von Aufzeichnungsmedien auf Bacteriorhodopsinbasis wie etwa solchen, die Purpurmembran enthalten, in der Holographie entgegenstand, ist das ungünstige Signal/Rauschverhältnis, das beim Einsatz der üblichen Aufzeichnungs- und Wiedergabeverfahren zu beobachten ist. Der Grund dafür liegt einerseits in der vorgegebenen relativ niedrigen Beugungseffizienz der Purpurmembran, andererseits aber in dem hohen Anteil an anfallendem Streulicht, welcher von immanenten, wie der Teilchengröße der Purpurmembran-Partikel, herstellungsbedingten, wie mechanischen Spannungen und Brechungsindexsprüngen zum Matrixmaterial, sowie betriebsbedingten Faktoren wie Staub und Temperatur- oder Feuchtigkeitsschwankungen beeinflußt wird.

Die Polarisationsabhängigkeit der Beugungseffizienz von Hologrammen ist in H. Okayama et al., Applied Physics Letters 19(9), 5.359-360, beschrieben.

Die Aufgabe der Erfindung lag daher darin, ein Verfahren anzugeben, mit dessen Hilfe sich bei Verwendung derartiger Aufzeichnungsmedien das Signal/Rauschverhältnis insbesondere bei der holographischen Wiedergabe deutlich verbessern läßt, und der Streulichtanteil deutlich verringert werden kann.

Gelöst wird die Aufgabe durch ein Verfahren, welches dadurch gekennzeichnet ist, daß die Aufzeichnung des Hologramms mit Hilfe von circular polarisiertem Licht und die Rekonstruktion des Hologramms mit Hilfe von linear polarisiertem Licht vorgenommen wird, wobei im Strahlengang des rekonstruierten Hologramms bestimmte Polarisationsanteile selektiert werden.

Eine besonders einfache und leistungsfähige Variante des Verfahrens besteht darin, daß bei der Aufzeichnung des Hologrammes als Referenz- und Objektwelle zwei gegensinnig circular polarisierte Wellen verwendet werden. Als Strahlungsquellen eignen sich dabei insbesondere die bekannten, kohärentes Licht liefernden Laser, wobei bevorzugt solche ausgewählt werden, die im Wellenlängenbereich von 400nm bis 700nm arbeiten. Beispiele für derartige geeignete Laserlichtquellen sind Gas-, Farbstoff- oder Diodenlaser. Allgemein hat sich für die Referenz- und Objektwelle der sichtbare, insbesondere der blaue Wellenlängenbereich als besonders zweckmäßig erwiesen.

Die gegensinnig circulare Polarisation von Objekt- und Referenzstrahl kann in der in der Optik üblichen und bekannten Weise erreicht werden. Eine mögliche Methode ist beispielsweise der Einsatz einer oder mehrerer λ/4-Platten.

Das Aufzeichnungsmedium auf Bacteriorhodopsinbasis kann in der grundsätzlich bekannten, für die Holographie geeigneten Art und Weise eingesetzt werden. Dies gilt sowohl für die bereits eingangs genannten grundsätzlich möglichen Pigmentsysteme, als auch für die Formen, in denen es in den Strahlengang eingebracht werden kann, also z.B. als Film oder Gel, eingebettet in Polymere oder auf Substrate wie etwa Glasplatten aufgebracht. Geeignete Schichtdicken liegen im Bereich von 1 bis 1000 µm, vorteilhaft 20 bis 200 µm.

Als vorteilhaft hat es sich erwiesen, membrangebundenes Material, wie etwa die Purpurmebran, in zerkleinerter Form einzusetzen, wodurch die für unzerkleinertes Material typische, inhomogene Teilchendurchmesserverteilung, die im allgemeinen einen in der Größenordnung sichtbarer Wellenlängen liegenden Durchschnittswert aufweist, homogenisiert und zu kleineren Durchschnittswerten verschoben wird. Dies kann beispielsweise dadurch geschehen, daß das Material, z.B. die Purpurmembran, einer Behandlung mit Ultraschall unterworfen wird. Durch die Zerkleinerung kann ein gegenüber unzerkleinertem Material weiter verbessertes Signal/Rauschverhältnis erzielt werden.

Die Rekonstruktion des Hologrammes erfolgt erfindungsgemäß mit Hilfe von linear polarisiertem Licht. Wie für die Erzeugung von Objekt- und Referenzwelle eignen sich auch für die Erzeugung der Rekonstruktionswelle die bekannten, kohärentes Licht abstrahlenden Quellen, bevorzugt also Laserlichtquellen. Dies gilt für im B-Zustand vorliegendes ebenso wie für in einem Zwischenzustand vorliegendes Aufzeichnungsmedium.

Vorteilhaft wird der sichtbare Wellenlängenbereich und/oder der Bereich des nahen Infraroten ausgewählt, wobei gemäß einer bevorzugten Ausführungsform für Lese- und Objekt-/Referenzstrahl verschiedene Wellenlängen eingesetzt werden, wodurch sich z.B. bei Echtzeitanwendungen die Hologrammdynamik bzw. -kinetik besonders leicht beobachten läßt. So wird z.B. für Hologramme, bei denen die Objekt-/Referenzwellen eine Photokonversion des Anfangszustandes verursachen (B-Typ-Hologramme), durch eine von der Objekt-/Referenzwellenlänge verschiedene Rekonstruktionswellenlänge eine Echtzeitbeobachtung dynamischer Hologrammänderungen ermöglicht. Bei Hologrammen, bei denen die Objekt-/Referenzwellen eine Photokonversion eines Zwischenzustandes (Photointermediates) bewirken, ist eine zweite Welle mit demgegenüber unterschiedlicher Wellenlänge nötig, um den Photointermediatzustand durch Anregung des Anfangszustandes ("optisches Pumpen") zu populieren. Dabei kann die Pumpwelle gleichzeitig als Lesewelle verwendet werden, was den Vorteil hat, daß durch eine Erhöhung der Intensität der Lese- bzw. Pumpwelle bis zu einem Optimalwert auch eine Erhöhung der Hologrammeffizienz anstelle einer Erniedrigung erzielt werden kann. Als gut geeignet hat sich beispielsweise bei Wildtyp-Bacteriorhodopsin als Aufzeichnungsmedium und M-Typ-Holographie gelbes Licht für den Lesestrahl erwiesen, wenn für die Aufzeichnung blaues Licht eingesetzt wurde.

Als Strahlungsquellen lassen sich in der üblichen Weise z.B. Gas-, Farbstoff- oder Diodenlaser verwenden.

Die erforderliche lineare Polarisation kann bereits im Laser erzeugt oder z.B. mittels Filterung durch Linearpolfilter (z.B. Glan-Thompson-Polarisator) gewährleistet werden.

Bei der Wechselwirkung zwischen Hologramm und Rekonstruktions-(Lese-)strahl weist das erzeugte Streulicht dieselbe Polarisation wie die Lesewelle auf, ist also linear polarisiert. Das erzeugte Hologrammlicht zeigt jedoch eine starke elliptische Polarisierung, wobei die lange Halbachse der Ellipse senkrecht zur Polarisationsrichtung des Streulichtes verläuft. Daraus ergibt sich die Möglichkeit, im Strahlengang des Hologrammstrahles bestimmte Strahlanteile polarisationsabhängig zu selektieren.

Zweckmäßig werden dabei die linear polarisierten Streulichtanteile ausgefiltert. Dies kann vorteilhaft dadurch geschehen, daß in den Strahlengang des rekonstruierten Hologrammes ein geeignetes Filter, vorzugsweise ein Linearpolarisationsfilter eingebracht und so justiert wird, daß es in Sperrichtung zur Polarisationsrichtung der Lesewelle steht, also annähernd oder genau senkrecht dazu. In dieser Anordnung kann somit das Streulicht nahezu vollständig zurückgehalten werden, während der Strahl des rekonstruierten Hologrammes ohne wesentliche Schwächung seiner Intensität das Polarisationsfilter zu durchdringen vermag. Auf diese Weise ließen sich mit üblichen Purpurmembranvarianten enthaltenden Aufzeichnungsmedien Signal/Rauschverhältnisse erzielen, die etwa um den Faktor 30 besser waren als bei den üblichen Aufzeichnungs- und Wiedergabeverfahren. Die Verbesserung konnte beispielsweise durch Intensitätsmessung mittels Photodioden erfaßt werden.

Für den Einsatz als Linearpolarisationsfilter kommen z.B. die in der Optik üblichen Anordnungen in Frage, wie beispielsweise Filter auf Kristall- oder vorteilhaft Folienbasis, die sich durch einfache Bauweise und Handhabung auszeichnen.

Neben der im Rahmen der Erfindung bevorzugten Selektion durch Polarisationsfilter ist es grundsätzlich beispielsweise auch möglich, den zirkularen Anteil im Rekonstruktionsstrahl zu selektieren. Dies kann über eine Transformation in linear polarisiertes Licht geschehen, beispielsweise mittels einer sog. λ/4-Platte, sowie eine anschließende Filterung durch ein Linearpolfilter. Diese Variante hat jedoch den Nachteil, daß sie wellenlängenabhängig ist, so daß die Anordnung auf jede einzelne Wellenlänge justiert und optimiert werden muß, und die abgebeugte Intensität circularen Lichtes ca. um den Faktor 3 niedriger liegt als in der beschriebenen Konfiguration mit linear polarisierter Referenzwelle.

Das erfindungsgemäße Verfahren wird mit besonderem Vorteil bei solchen holographischen Verfahren angewendet, bei denen es auf ein günstiges Signal/Rausch-Verhältnis ankommt, wie etwa die dynamische holographische Informationsaufzeichnung bzw. Datenspeicherung, die optische Filterung und die optische Mustererkennung. Gute Ergebnisse wurden auch bei der Echtzeitinterferometrie erzielt, wobei es jedoch erforderlich ist, z.B. durch Zwischenschalten von geeigneten Filtern einen entsprechenden Polarisationszustand des Objektstrahls sicherzustellen.

Nachstehend wird die Erfindung an Hand eines Ausführungsbeispiels näher erläutert:

### Beispiel:

Als holographisches Aufzeichnungsmedium wurde ein auf eine ca. 1 mm dicke Glasplatte aufgetragener Purpurmembran-Film (Schichtdicke ca. 50 µm) verwendet, der als wirksame Komponente Wildtyp-Bacteriorhodopsin enthielt. Vor dem Aufbringen waren die Purpurmembran-Partikel durch Einwirkung von Ultraschall so weit zerkleinert worden, daß nur noch geringe Absorption im Wellenlängenbereich von 700 bis 800 nm zu beobachten war. Die Purpurmembran lag im B-Zustand vor.

Die mit dem Film versehene Glasplatte wurde nun in Aufzeichnungsstellung in eine Anordnung zur optischen Mustererkennung mit Hilfe holographischer Methoden eingebracht. Mit diesem, oft als "Joint-Transform-Correlator" bezeichneten Aufbau (vgl. z.B. N. Collings, Optical Pattern Recognition Using Holographic Techniques, Addison Wesley, Wokingham (1988)) kann beispielsweise nachgeprüft werden, wie oft ein vorgegebenes Element (Suchobjekt), beispielsweise ein Buchstabe, eine Buchstabenkombination, oder ein Muster, in einem größeren Kollektiv verschiedener Elemente, beispielsweise einem Text oder Bild, vorkommt. Dabei wird in den Referenzstrahl ein Bild, z.B. ein Diapositiv, des Kollektivs, in den Objektstrahl ein Bild (Diapositiv) des Suchobjektes eingebracht. Beide Wellen treffen auf dem holographischen Medium zusammen und erzeugen dort ein entsprechendes Interferenzmuster. Nach Rekonstruktion des korrespondierend zu dem Interferenzmuster im Aufzeichnungsmedium gebildeten Hologramms erhält man helle Korrelationspunkte an den Stellen, an denen sich das Suchobjekt im vorgelegten Kollektiv findet, während bei Ähnlichkeit, d.h. nicht völliger Übereinstimmung, Punkte geringerer Helligkeit auftreten. Das entstehende Bild kann beispielsweise mittels Kamera registriert und über einen Bildschirm wiedergegeben werden, aber auch photographisch aufgezeichnet oder mittels Mattscheibe sichtbar gemacht werden.

Bei dem in dem vorliegenden Fall eingesetzten Aufbau wurden Objekt- und Referenzwelle mittels Kryptonlaser (Wellenlänge 412 nm) erzeugt; beide Strahlen waren durch Dazwischenschalten von Glan-Thompson-Polarisatoren und λ/4-Platten so polarisiert, daß sie mit gegensinnig circularer Polarisation auf das holographische Aufzeichnungsmedium trafen. Der Lese-/Pumpstrahl wurde ebenfalls mittels Kryptonlaser erzeugt (Wellenlänge 568 nm), und zwar bereits in linear polarisierter Form. In seinen Strahlengang nach Durchlaufen des Hologrammes war ein Linearpolarisationsfilter eingebracht, dessen Filterebene in bestimmte Winkelstellungen zur Polarisationsebene des Lesestrahles gedreht werden konnte.

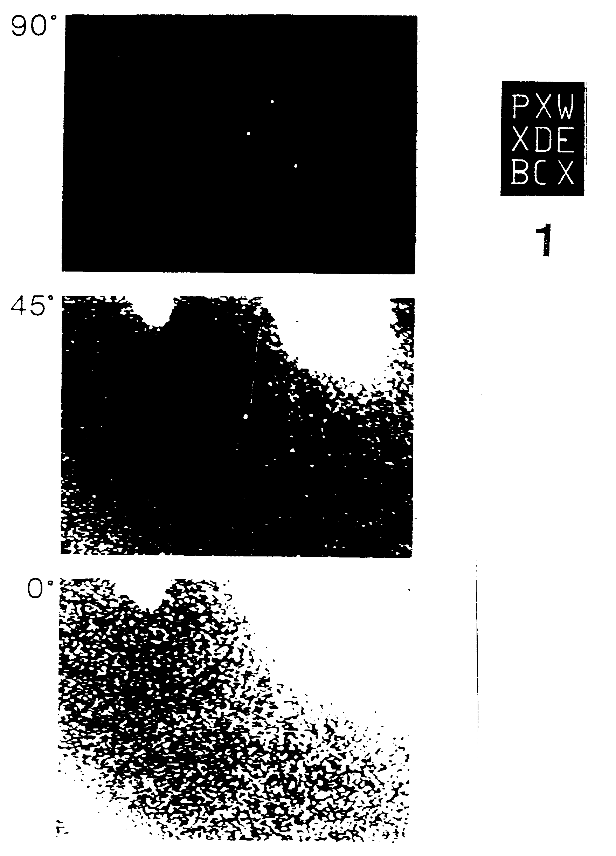

In der Figur ist der bei dem Versuch vorgelegte, aus drei jeweils drei Buchstaben enthaltenden Zeilen bestehende Text als Vorlage 1 dargestellt; die Aufgabe bestand darin, den Buchstaben "X" herauszufinden. Die Figur zeigt weiterhin die bei verschiedenen Winkelstellungen des Linearpolarisationsfilters sich ergebenden Bilder, die mittels einer Kamera registriert und auf einem Bildschirm wiedergegeben wurden.

Das unterste Bild wurde bei paralleler Stellung der Filterebene des Linearpolarisationsfilters zur Polarisationsebene des Lesestrahles ("0°-Position") aufgenommen. In diesem Fall ist ausschließlich das Rauschen zu erkennen, das dem gewünschten Signal überlagert ist.

Im mittleren Bild beträgt der Winkel zwischen Polarisationebene und Filterebene 45° ("45°-Position"). Das Signal ist von Rauschen überlagert, aber noch erkennbar, da sowohl ein Anteil des Rauschens als auch des Signals zu beobachten ist.

Das oberste Bild wurde bei senkrechter Stellung der Filterebene zur Polarisationsebene des Lesestrahles aufgenommen ("90°-Position"). Das Rauschen ist bei dieser Stellung vollständig verschwunden, und das Signal, nämlich die drei hellen Punkte korrespondierend zu den Positionen des Musters "X" in der Vorlage tritt in aller Deutlichkeit und ungestört hervor.

Eine Überlagerung des Signals (90°-Stellung) und des Rauschens (0°-Stellung) ist zu beobachten, wenn das erfindungsgemäße Verfahren nicht angewendet wird; auch in diesem Fall ist kein Signal mehr erkennbar.

## Patentansprüche

1. Verfahren zur Verbesserung des Signal-Rausch-Verhältnisses bei der Holographie mit Aufzeichnungsmedien auf Bacteriorhodopsinbasis, dadurch gekennzeichnet, daß die Aufzeichnung des Hologramms mit Hilfe von circular polarisiertem Licht und die Rekonstruktion des Hologramms mit Hilfe von linear polarisiertem Licht vorgenommen wird, wobei im Strahlengang des rekonstruierten Hologramms bestimmte Polarisationsanteile selektiert werden.

2. Verfahren nach Anspruch 1, dadurch gekennzeichnet, daß die Aufzeichnung des Hologramms mit Hilfe von zwei gegensinnig circular polarisierten Lichtstrahlen vorgenommen wird.

3. Verfahren nach Anspruch 1 oder 2, dadurch gekennzeichnet, daß im Strahlengang des rekonstruierten Hologrammes der linear polarisierte Anteil selektiert wird.

4. Verfahren nach einem oder mehreren der Ansprüche 1 bis 3, dadurch gekennzeichnet, daß Aufzeichnungsmedien verwendet werden, die als aktive Komponente Bacteriorhodopsin vom Wildtyp oder Varianten desselben enthalten.

5. Verfahren nach einem oder mehreren der Ansprüche 1 bis 4, dadurch gekennzeichnet, daß die Aufzeichnung und die Rekonstruktion des Hologramms mit Hilfe von Licht verschiedener Wellenlängen vorgenommen wird.

6. Verfahren nach einem oder mehreren der Ansprüche 1 bis 5, dadurch gekennzeichnet, daß das Aufzeichnungsmedium zerkleinerte Purpurmembran enthält.

7. Verwendung des Verfahrens nach einem oder mehreren der Ansprüche 1 bis 6 zur optischen Mustererkennung.

8. Verwendung des Verfahrens nach einem oder mehreren der Ansprüche 1 bis 6 zur Echtzeitinterferometrie.

9. Verwendung des Verfahrens nach einem oder mehreren der Ansprüche 1 bis 6 zur optischen Filterung.

10. Verwendung des Verfahrens nach einem oder mehreren der Ansprüche 1 bis 6 zur dynamischen holographischen Informationsaufzeichnung.

## Claims

1. Process for improving the signal-to-noise ratio in holography using bacteriorhodopsin-based recording media, characterized in that the recording of the hologram is carried out using circularly polarized light and the reconstruction of the hologram is carried out using linearly polarized light, specific polarization components being selected in the beam path of the reconstructed hologram.

2. Process according to Claim 1, characterized in that the recording of the hologram is carried out using two mutually oppositely circularly polarized light beams.

3. Process according to Claim 1 or 2, characterized in that the linearly polarized component is selected in the beam path of the reconstructed hologram.

4. Process according to one or more of Claims 1 to 3, characterized in that recording media are used which contain bacteriorhodopsin of the wild type or variants thereof as the active component.

5. Process according to one or more of Claims 1 to 4, characterized in that the recording and the reconstruction of the hologram are carried out using light of differing wavelengths.

6. Process according to one or more of Claims 1 to 5, characterized in that the recording medium contains comminuted magenta membrane.

7. Use of the process according to one or more of Claims 1 to 6 for optical pattern recognition.

8. Use of the process according to one or more of Claims 1 to 6 for real-time interferometry.

9. Use of the process according to one or more of Claims 1 to 6 for optical filtering.

10. Use of the process according to one or more of Claims 1 to 6 for dynamic holographic information recording.

## Revendications

1. Procédé pour améliorer le rapport signal/bruit en holographie avec des supports d'enregistrement à base de bactériorhodopsine, caractérisé en ce que l'enregistrement de l'hologramme est réalisé à l'aide d'une lumière à polarisation circulaire et la reconstruction de l'hologramme est réalisée à l'aide d'une lumière à polarisation linéaire, les fractions de polarisation étant sélectionnées sur le trajet du faisceau lumineux de l'hologramme reconstruit.

2. Procédé selon la revendication 1, caractérisé en ce que l'enregistrement de l'hologramme est réalisé à l'aide de deux faisceaux lumineux à polarisation circulaire en inverse.

3. Procédé selon la revendication 1 ou 2, caractérisé en ce que la fraction de polarisation linéaire est choisie sur le trajet du faisceau lumineux de l'hologramme reconstruit.

4. Procédé selon une ou plusieurs des revendications 1 à 3, caractérisé en ce que sont utilisés des supports d'enregistrement qui contiennent comme composante active de la bactériorhodopsine de type naturelle ou des variantes de celle-ci.

5. Procédé selon une ou plusieurs des revendications 1 à 4, caractérisé en ce que l'enregistrement et la reconstruction de l'hologramme est réalisé à l'aide de lumière de différentes longueurs d'onde.

6. Procédé selon une ou plusieurs des revendications 1 à 5, caractérisé en ce que le milieu d'enregistrement contient une membrane pourpre fragmentée.

7. Utilisation du procédé selon un ou plusieurs des revendications 1 à 6 pour la reconnaissance de forme optique.

8. Utilisation du procédé selon une ou plusieurs des revendications 1 à 6 pour l'interférométrie en temps réel.

9. Utilisation du procédé selon une ou plusieurs des revendications 1 à 6 pour le filtrage optique.

10. Utilisation du procédé selon une ou plusieurs des revendications 1 à 6 pour l'enregistrement d'information holographique dynamique.
